# EUROPEAN PATENT APPLICATION

(11) **EP 1 724 001 A2**
(43) Date of publication of application: **22.11.2006**
(21) Application number: 06009673.2
(22) Date of filing: 10.05.2006
(51) Int. Cl.: B01F 3/08, B01L 3/00, G01N 1/38

(54) **Liquid/liquid interface reaction equipment**

(30) Priority: 16.05.2005 JP 2005142055; 16.02.2006 JP 2006038791
(71) Applicant: Dainippon Screen Mfg., Co., Ltd., Kyoto 602-8585 (JP)
(72) Inventor: Itsuo, Furukawa Dainippon Screen Mfg. Co., Ltd., Horikawa-dori Kamigyo-ku Kyoto 602-8585 (JP); Hitoshi, Haibara Dainippon Screen Mfg. Co., Ltd., Horikawa-dori Kamigyo-ku Kyoto 602-8585 (JP)
(74) Representative: Goddar, Heinz J.

(57) **Abstract**

The invention provides an equipment capable of suppressing abrupt changes in flow rate or flow direction in joining different kinds of liquids by making an angle for intersection of different individual channels as small as possible, in case of making different individual channels to intersect and join and forming a laminar flow of liquid/liquid interface in a combined channel to react different kinds of liquids. Grooves are formed at the front face and back face of a substrate 10 to form two individual channels 24, 26, two grooves are intersected on the way, and the individual channels are joined in thickness direction of the substrate 10 to form a combined channel 28. Different kinds of liquids flow in the individual channels 24, 26, both liquids are joined to form a liquid/liquid interface of two-layer flow in the combined channel, and two kinds of liquids are reacted at the liquid/liquid interface.

## Description

### BACKGROUND OF THE INVENTION

### 1. FIELD OF THE INVENTION

The present invention relates to a liquid/liquid interface reaction equipment in which two kinds of liquids are made to flow at a minute flow rate, the flows of these liquids are made to come together to form a liquid/liquid interface of two-layer flow, and two kinds of liquids are made to react at this liquid/liquid interface. This liquid/liquid interface reaction equipment is used in synthesis of, e.g., chemicals, cosmetics, chemical seasonings, and paints.

### 2. DESCRIPTION OF THE RELATED ART

In this type of liquid/liquid interface reaction equipment, two kinds of liquids are made to flow individually in two minute liquid channels at minute flow rates respectively, and these two liquid channels are made to intersect on the way, causing two liquid flows to come together on the downstream side, whereby a liquid/liquid interface of two-layer flow is formed in a combined channel, and two kinds of liquid are made to react at this liquid/liquid interface. Such equipment, as disclosed in, for example, the Japanese Patent Publication (unexamined) No. 277478/2002, includes the following structure. In this structure, fine grooves or holes are formed by machining at the surface of a substrate (chip) that is made of glass, silicon, plastics, ceramics, metals, and the like, and a cover plate is brought in direct contact with the surface of this substrate to cover the grooves, letting the grooves channels of liquids, as well as letting the holes feed ports or collection ports. Further, in the cover plate adhered to the substrate surface, a plurality of through holes in communication with the liquid feed ports and the liquid collection port are formed by machining. In addition, the channel system consists of two liquid channels through which two kinds of liquids flow individually, and a combined channel in which those two liquid channels are intersected to join. The leading edges of the liquid channels communicate with the liquid feed ports respectively, and the trailing edge of the combined channel communicates with the liquid collection port. At the time of causing the reaction between two kinds of liquids to occur using the equipment of such construction, liquids are fed individually into respective liquid feed ports with, e.g., a micro-pump, micro-cylinder, or micro-valve. Two liquids having been fed into the liquid feed ports flow through respective liquid channels to join on the downstream side. Further, two-layer flow of liquid/liquid interface is formed in the combined channel, and the reaction between two kinds of liquids gets on at this liquid/liquid interface. Thereafter, by any suitable method, for example, by adding a reaction-stopping solution to these liquids, or cooling the liquids, the reaction is stopped, and the liquid including reaction products is made to flow out from the trailing edge of the combined channel, and to discharge through the liquid collection port.

As disclosed in the conventional liquid/liquid interface reaction equipment, in such a structure that two grooves are formed at the surface of a substrate to be liquid channels, as well as these two grooves are intersected in a planar manner at the substrate surface to join into one groove, forming a combined channel, an angle at which two liquid channels are intersected comes to be larger. Therefore, a problem exits in that abrupt changes in flow rate or in flow direction are made when two kinds of liquid are joined, whereby solids are produced due to these changes, and clogging in the channels occurs. Such problems are especially significant at the time of being kicked out of the experimental stage into the industrialization (mass production) stage.

### SUMMARY OF THE INVENTION

The present invention was made in view of the above-described situations, and has an object of providing a liquid/liquid interface reaction equipment with which in the case where different individual channels are made to intersect to join and a laminar flow of liquid/liquid interface is formed in this combined channel to make the reaction of different kinds of liquids, by making an angle at which different individual channels are intersected as small as possible, it is possible to suppress abrupt changes in flow rate or in flow direction when different kinds of liquids are joined, and to prevent the production of solids and thus the occurrence of clogging in the channels.

The invention as defined in claim 1 is a liquid/liquid interface reaction equipment in which different kinds of liquids are made to flow in different individual channels respectively, the mentioned different individual channels are met each other on the way to form a liquid/liquid interface of laminar flow in a combined channel, and the mentioned different kinds of liquids are reacted with each other at this liquid/liquid interface; the liquid/liquid interface reaction equipment being characterized in that there are formed grooves at the front face and the back face of a substrate respectively, and these grooves form the mentioned different individual channels; and that the sum of depth dimensions of each of the mentioned grooves that are formed at the front face and at the back face of the substrate respectively is made larger than a thickness dimension of the substrate; as well as these grooves are intersected in plan view to cause the mentioned different individual channels to meet each other in thickness direction of the substrate.

The invention as defined in claim 2 is a liquid/liquid interface reaction equipment in which different kinds of liquids are made to flow in different individual channels respectively, the mentioned different individual channels are met each other on the way to form a liquid/liquid interface of laminar flow in a combined channel, and the mentioned different kinds of liquids are reacted with each other at this liquid/liquid interface; the liquid/liquid interface reaction equipment being characterized in that there are formed grooves at the front face and the back face of a substrate respectively, and these grooves form the mentioned different individual channels; and that the groove depth of one or both of the mentioned grooves that are formed at the front face and at the back face of the substrate respectively is made to be larger by degrees in downward direction; and these grooves are intersected in thickness direction of the substrate to cause the mentioned different individual channels to meet each other.

The invention as defined in claim 3 is the liquid/liquid interface reaction equipment according to claim 1 or 2, the liquid/liquid interface reaction equipment being characterized in that plural pieces of the mentioned substrates are stacked to be in direct contact so that said grooves are positioned to be overlapped in plan view between the substrates respectively.

The invention as defined in claim 4 is the liquid/liquid interface reaction equipment according to claim 3, the liquid/liquid interface reaction equipment being characterized in that at the faces of the adjacent substrates in direct contact, a groove that is formed at the front face of one substrate and a groove that is formed at the back face of the other substrate are intersected on the way to join the individual channel of one substrate and the individual channel of the other substrate.

The invention as defined in claim 5 is the liquid/liquid interface reaction equipment according to claim 3, the liquid/liquid interface reaction equipment being characterized in that at the faces of the adjacent substrates in direct contact, a groove that is formed at the back face of one substrate and a groove that is formed at the front face of the other substrate are positioned to be overlapped in plan view, as well as a groove that is formed at the front face of one substrate and a groove that is formed at the back face of the other substrate are positioned to be overlapped in plan view.

The invention as defined in claim 6 is a liquid/liquid interface reaction equipment in which different kinds of liquids are made to flow in different individual channels respectively, the mentioned different individual channels are met each other on the way to form a liquid/liquid interface of laminar flow in a combined channel, and the mentioned different kinds of liquids are reacted with each other at this liquid/liquid interface, the liquid/liquid interface reaction equipment being characterized in that at least one groove is formed at the front face and the back face of a substrate respectively to form the mentioned different individual channels with these grooves; as well as these grooves are intersected to cause the mentioned different individual channels to meet each other in thickness direction of the substrate; and that plural pieces of the mentioned substrates are stacked to be in direct contact so that the mentioned grooves are positioned to be overlapped each other in plan view between the substrates.

The invention as defined in claim 7 is the liquid/liquid interface reaction equipment according to claim 6, the liquid/liquid interface reaction equipment being characterized in that the sum of depth dimensions of each of the mentioned grooves that are formed at the front face and at the back face of the substrate respectively is made larger than the thickness dimension of the substrate, and the mentioned grooves are intersected in plan view to cause the mentioned different individual channels to meet each other in thickness direction of the substrate.

The invention as defined in claim 8 is the liquid/liquid interface reaction equipment according to claim 7, the liquid/liquid interface reaction equipment being characterized in that at the faces of the adjacent substrates in direct contact, a groove that is formed at the front face of one substrate and a groove that is formed at the back face of the other substrate are intersected on the way to join an individual channel of one substrate and an individual channel of the other substrate.

The invention as defined in claim 9 is the liquid/liquid interface reaction equipment according to claim 6, the liquid/liquid interface reaction equipment being characterized in that the groove depth of one or both of the mentioned grooves that are formed at the front face and at the back face of a substrate respectively is made larger by degrees in downward direction, these grooves are intersected in thickness direction of the substrate to cause the mentioned different individual channels to meet each other, and plural pieces of the mentioned substrates are stacked with the front faces and the back faces opposed respectively in alternate order.

The invention as defined in claim 10 is a liquid/liquid interface reaction equipment in which different kinds of liquids are made to flow in different individual channels respectively, the mentioned different individual channels are met each other on the way to form a liquid/liquid interface of laminar flow in a combined channel, and the mentioned different kinds of liquids are reacted with each other at this liquid/liquid interface, the liquid/liquid interface reaction equipment being characterized in that grooves are formed at one face of two substrates respectively to form the mentioned different individual channels with these grooves, as well as two substrates are brought in direct contact so that the faces at which the grooves are formed are opposed, and these grooves are intersected in plan view to join the mentioned different individual channels; and that plural pieces of substrates in sets of the mentioned two substrates are stacked to be in direct contact.

The invention as defined in claim 11 is the liquid/liquid interface reaction equipment according to any one of claims 1 through 10, the liquid/liquid interface reaction equipment being characterized in that at least one set of grooves that form different individual channels though which the mentioned different kinds of liquids flow respectively are formed in at least one side of the substrate, each of the mentioned grooves is intersected to cause the mentioned different individual channels to meet each other in one side of the substrate, a liquid/liquid interface of laminar flow is formed in this one side combined channel, and the mentioned different kinds of liquids are reacted with each other at this liquid/liquid interface as well.

In the liquid/liquid interface reaction equipment of the invention according to claim 1, the sum of depth dimensions of each of the grooves that are formed at the front face and at the back face of the substrate respectively is made larger than a thickness dimension of the substrate; and these grooves are intersected in plan view to cause different individual channels of respective channels to meet each other in thickness direction of the substrate. Consequently, being different from the structure in which two grooves that are formed only at the front face of a substrate are intersected in the same plane as in the conventional equipment, an angle at which different individual channels are intersected (angle in a plane orthogonal to a liquid/liquid interface formed by different kinds of liquids being joined) can be substantially 0°

As a result, when using the liquid/liquid interface reaction equipment of the invention according to claim 1, in the case where different individual channels are intersected to join and a laminar flow of liquid/liquid interface is formed in this combined channel to make the reaction of different kinds of liquids, it is possible to suppress abrupt changes in flow rate or in flow direction when different kinds of liquids are joined, and to prevent the production of solids and thus the occurrence of clogging in the channels.

In the liquid/liquid interface reaction equipment of the invention according to claim 2, the groove depth of one or both of the grooves that are formed at the front face and at the back face of the substrate respectively is made to be larger by degrees in downward direction; and these grooves are intersected in thickness direction of the substrate to cause the mentioned different individual channels of respective grooves to meet each other. Consequently, as compared with the structure in which two grooves that are formed only at the front face of the substrate are intersected in the same plane as in the conventional equipment, it is possible to make an angle at which different individual channels are intersected extremely small.

As a result, when using the liquid/liquid interface reaction equipment of the invention according to claim 2, in the case where different individual channels are intersected to join and a laminar flow of liquid/liquid interface is formed in this combined channel to make the reaction of different kinds of liquids, it is possible to suppress abrupt changes in flow rate or in flow direction when different kinds of liquids are joined, and to prevent the production of solids and thus the occurrence of clogging in the channels.

In the liquid/liquid interface reaction equipment of the invention according to claim 3, plural pieces of substrates are stacked, so that it is possible to obtain a large amount of reaction products at one time.

In the liquid/liquid interface reaction equipment of the invention according to claim 4, a liquid/liquid interface is formed in a combined channel even between the adjacent substrates in direct contact, and the reaction between different kinds of liquids is made at this liquid/liquid interface. Consequently, it is possible to obtain a large amount of reaction products at one time.

Furthermore, a groove that is formed at the front face of one of adjacent substrates and a groove that is formed at the back face of the other substrate are intersected at the faces in direct contact, and thus an individual channel of one substrate and an individual channel of the other substrate are joined at the faces in direct contact. Therefore, an angle at which these different individual channels are intersected (angle in a plane orthogonal to a liquid/liquid interface formed by different kinds of liquids being joined) is substantially 0° . As a result, it is possible to suppress abrupt changes in flow rate or in flow direction when different kinds of liquids are joined, and to prevent the production of solids and thus the occurrence of clogging in the channels.

In the liquid/liquid interface reaction equipment of the invention according to claim 5, it is possible to obtain a large amount of reaction products at one time.

In the liquid/liquid interface reaction equipment of the invention according to claim 6, different individual channels of respective grooves that are formed at the front face and the back face of a substrate are joined in thickness direction of the substrate. Consequently, as compared with the structure in which two grooves that are formed only at the front face of the substrate are intersected in the same plane as in the conventional equipment, it is possible to make an angle at which different individual channels are intersected (angle in a plane orthogonal to a liquid/liquid interface formed by different kinds of liquids being joined) small.

As a result, when using the liquid/liquid interface reaction equipment of the invention according to claim 6, in the case where different individual channels are intersected to join, and a laminar flow of liquid/liquid interface is formed in this combined channel to make the reaction of different kinds of liquids, it is possible to suppress abrupt changes in flow rate or in flow direction when different kinds of liquids are joined, and to prevent the production of solids and thus the occurrence of clogging in the channels. Furthermore, plural pieces of substrates are stacked to be in direct contact, so that it is possible to obtain a large amount of reaction products at one time.

In the liquid/liquid interface reaction equipment of the invention according to claim 7, an angle at which different individual channels are intersected (angle in a plane orthogonal to a liquid/liquid interface formed by different kinds of liquids being joined) is substantially 0° . Thus, it is possible to obtain with reliability the mentioned advantages of the invention according to claim 6.

In the liquid/liquid interface reaction equipment of the invention according to claim 8, a groove that is formed at the front face of one of adjacent substrates and a grove that is formed at the back face of the other substrate are intersected at the faces in direct contact, and thus an individual channel of one substrate and an individual channel of the other substrate are joined at the faces in direct contact. Therefore, an angle at which these different individual channels are intersected (angle in a plane orthogonal to a liquid/liquid interface formed by different kinds of liquids being joined) is 0° . As a result, it is possible to suppress abrupt changes in flow rate or in flow direction when different kinds of liquids are joined, and to prevent the production of solids and thus the occurrence of clogging in the channels.

In the liquid/liquid interface reaction equipment of the invention according to claim 9, an angle at which different individual channels are intersected can be made extremely small. As a result, it is possible to obtain with reliability the mentioned advantages of the invention according to claim 6.

In the liquid/liquid interface reaction equipment of the invention according to claim 10, different individual channels of respective grooves that are formed at one face of two substrates respectively are joined at the faces in direct contact. Consequently, as compared with the structure in which two grooves that are formed only at the front face of one substrate are intersected in the same plane as in the conventional equipment, it is possible to make an angle at which different individual channels are intersected (angle in a plane orthogonal to a liquid/liquid interface formed by different kinds of liquids being joined) 0° .

As a result, when using the liquid/liquid interface reaction equipment of the invention according to claim 10, in the case where different individual channels are intersected to join, and a laminar flow of liquid/liquid interface is formed in this combined channel to make the reaction of different kinds of liquids, it is possible to suppress abrupt changes in flow rate or in flow direction when different kinds of liquids are joined, and to prevent the production of solids and thus the occurrence of clogging in the channels. Furthermore, plural pieces of substrates are stacked to be in direct contact, so that it is possible to obtain a large amount of reaction products at one time.

In the liquid/liquid interface reaction equipment of the invention according to claim 11, different individual channels meet each other also in one side of a substrate, a liquid/liquid interface of laminar flow is formed in this one side combined channel, and different kinds of liquids are reacted at this liquid/liquid interface as well. As a result, it is possible to obtain a large amount of reaction products at one time.

The foregoing and other objects, features, aspects and advantages of the present invention will become more apparent from the following detailed description of the present invention when taken in conjunction with the accompanying drawings.

### BRIEF DESCRIPTION OF THE DRAWINGS

Fig. 1 shows one preferred embodiment according to the present invention, and is an exploded perspective view showing a schematic construction of main parts of a liquid/liquid interface reaction equipment.
Fig. 2 is a plan view showing a channel construction of a substrate (chip), being a structural element of the equipment shown in Fig. 1.
Fig. 3A is a partially enlarged cross sectional view taken along the arrowed line A-A of Fig. 2.
Fig. 3B is a partially enlarged cross sectional view taken along the arrowed line B-B of Fig. 2.
Fig. 3C is a partially enlarged cross sectional view taken along the arrowed line C-C of Fig. 2.
Fig. 4A is a partially enlarged cross sectional view in the state in which the substrates shown in Fig. 2 and Figs. 3A, 3B, and 3C are stacked, being a cross sectional view in a position corresponding to along the line A-A of Fig. 2.
Fig. 4B is a partially enlarged cross sectional view in the state in which the substrates shown in Fig. 2 and Figs. 3A, 3B, and 3C are stacked, being a cross sectional view in a position corresponding to along the line B-B of Fig. 2.
Fig. 4C is a partially enlarged cross sectional view in the state in which the substrates shown in Fig. 2 and Figs. 3A, 3B, and 3C are stacked, being a cross sectional view in a position corresponding to along the line C-C of Fig. 2.
Fig. 5 shows another embodiment according to the invention, and is a plan view showing the channel construction of two substrates to in direct contact with each other.
Fig. 6A is a partially enlarged cross sectional view in the state in which with the front faces and the back faces of two substrates shown in Fig. 5 opposed to each other respectively, plural pieces of the substrates are stacked alternately, being a cross sectional view in a position corresponding to along the line A-A of Fig. 2.
Fig. 6B is a partially enlarged cross sectional view in the state in which with the front faces and the back faces of two substrates shown in Fig. 5 opposed to each other respectively, plural pieces of the substrates are stacked alternately, being a cross sectional view in a position corresponding to along the line B-B of Fig. 2.
Fig. 6C is a partially enlarged cross sectional view in the state in which with the front faces and the back faces of two substrates shown in Fig. 5 opposed to each other respectively, plural pieces of the substrates are stacked alternately, being a cross sectional view in a position corresponding to along the line C-C of Fig. 2.
Fig. 7 is a plan view of a substrate showing a channel construction different from the channel construction of the substrate shown in Fig. 2.
Fig. 8 is a partially enlarged cross sectional view of a substrate showing individual channels including a cross sectional shape different from the cross sectional shape of individual channels of the substrate shown in Figs. 3A, 3B, and 3C.
Fig. 9 shows a further embodiment according to the invention, and is a plan view showing a channel construction of a substrate, being a structural element of the liquid/liquid interface reaction equipment.
Fig. 10 is an enlarged plan view of O portion of Fig. 9.
Fig. 11D is a partially enlarged cross sectional view taken along the arrowed line D-D of Fig. 10.
Fig. 11E is a partially enlarged cross sectional view taken along the arrowed line E-E of Fig. 10.
Fig. 11F is a partially enlarged cross sectional view taken along the arrowed line F-F of Fig. 10.
Fig. 11G is a partially enlarged cross sectional view taken along the arrowed line G-G of Fig. 10.
Fig. 12 shows a still further embodiment according to the invention, and is a plan view showing a channel construction of two substrates to be in direct contact with each other.
Fig. 13D is a partially enlarged cross sectional view in the state in which with the front faces and the back faces of two substrates shown in Fig. 12 opposed to each other respectively, plural pieces of the substrates are stacked alternately, being a cross sectional view in a position corresponding to along the line D-D of Fig. 10.
Fig. 13E is a partially enlarged cross sectional view in the state in which with the front faces and the back faces of two substrates shown in Fig. 12 opposed to each other respectively, plural pieces of the substrates are stacked alternately, being a cross sectional view in a position corresponding to along the line E-E of Fig. 10.
Fig. 13F is a partially enlarged cross sectional view in the state in which with the front faces and the back faces of two substrates shown in Fig. 12 opposed to each other respectively, plural pieces of the substrates are stacked alternately, being a cross sectional view in a position corresponding to along the line F-F of Fig. 10.
Fig. 13G is a partially enlarged cross sectional view in the state in which with the front faces and the back faces of two substrates shown in Fig. 12 opposed to each other respectively, plural pieces of the substrates are stacked alternately, being a cross sectional view in a position corresponding to along the line G-G of Fig. 10.
Fig. 14 shows a yet further embodiment according to the invention including a construction different from those shown in Figs. 1 through 4 and Figs. 9 through 11, and is plan view showing a channel construction of two substrates, being structural elements of the liquid/liquid interface reaction equipment.
Fig. 15 is a plan view showing a state in which two substrates shown in Fig. 14 are overlapped.
Fig. 16H is a partially enlarged cross sectional view taken along the arrowed line H-H of Fig. 15.
Fig. 16I is a partially enlarged cross sectional view taken along the arrowed line I-I of Fig. 15.
Fig. 16J is a partially enlarged cross sectional view taken along the arrowed line J-J of Fig. 15.
Fig. 17H is a partially enlarged cross sectional view in the state in which plural pieces of substrates are stacked in sets of two substrates shown in Fig. 14, being a cross sectional view in a position corresponding to along the line H-H of Fig. 15.
Fig. 17I is a partially enlarged cross sectional view in the state in which plural pieces of substrates are stacked in sets of two substrates shown in Fig. 14, being a cross sectional view in a position corresponding to along the line I-I of Fig. 15.
Fig. 17J is a partially enlarged cross sectional view in the state in which plural pieces of substrates are stacked in sets of two substrates shown in Fig. 14, being a cross sectional view in a position corresponding to along the line J-J of Fig. 15.
Fig. 18 shows a further embodiment according to the invention different from those of Figs. 1 through 17, is a plan view showing the channel construction of a substrate (chip), being a structural element of a liquid/liquid interface reaction equipment, and is a view indicating different kinds of liquids flowing through channels with different fills.
Fig. 19K is a partially enlarged cross sectional view taken along the arrowed line K-K of Fig. 18, being a view indicating different kinds of liquids flowing through channels with different fills.
Fig. 19L is a partially enlarged cross sectional view taken along the arrowed line L-L of Fig. 18, being a view indicating different kinds of liquids flowing through channels with different fills.
Fig. 19M is a partially enlarged cross sectional view taken along the arrowed line M-M of Fig. 18, being a view indicating different kinds of liquids flowing through channels with different fills.
Fig. 19N is a partially enlarged cross sectional view taken along the arrowed line N-N of Fig. 18, being a view indicating different kinds of liquids flowing through channels with different fills.
Fig. 20K is a partially enlarged cross sectional view taken along the arrowed line K-K of Fig. 18.
Fig. 20L is a partially enlarged cross sectional view taken along the arrowed line L-L of Fig. 18.
Fig. 20M is a partially enlarged cross sectional view taken along the arrowed line M-M of Fig. 18.
Fig. 20N is a partially enlarged cross sectional view taken along the arrowed line N-N of Fig. 18.
Fig. 21 is a partially perspective view showing the structure of channels in the liquid/liquid interface reaction equipment shown in Fig. 18 with the illustration of a substrate and a cover plate omitted.

### DESCRIPTION OF THE PREFERRED EMBODIMENTS

Several preferred embodiments according to the present invention are hereinafter described referring to the drawings.

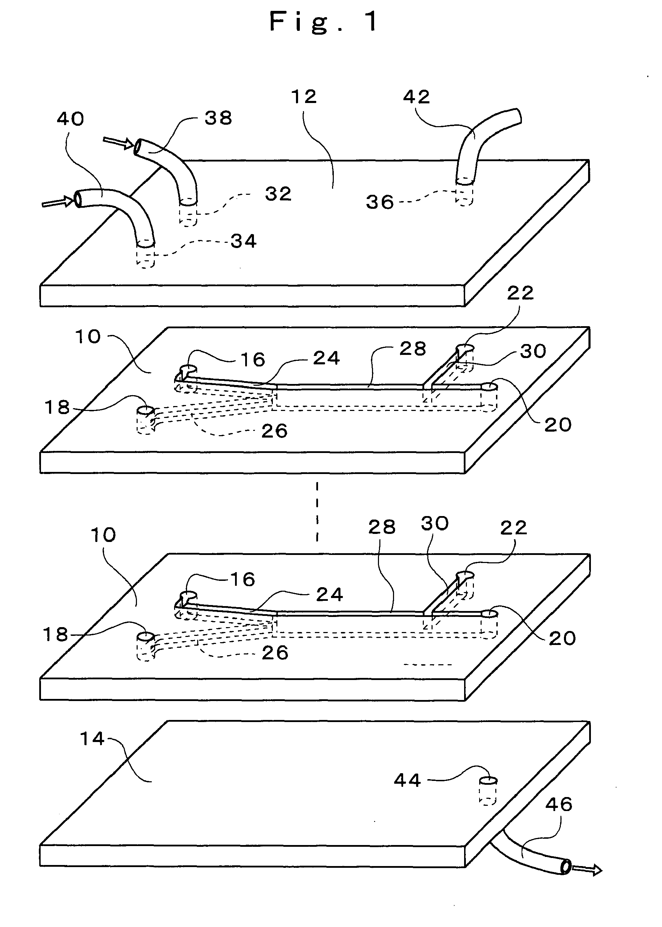

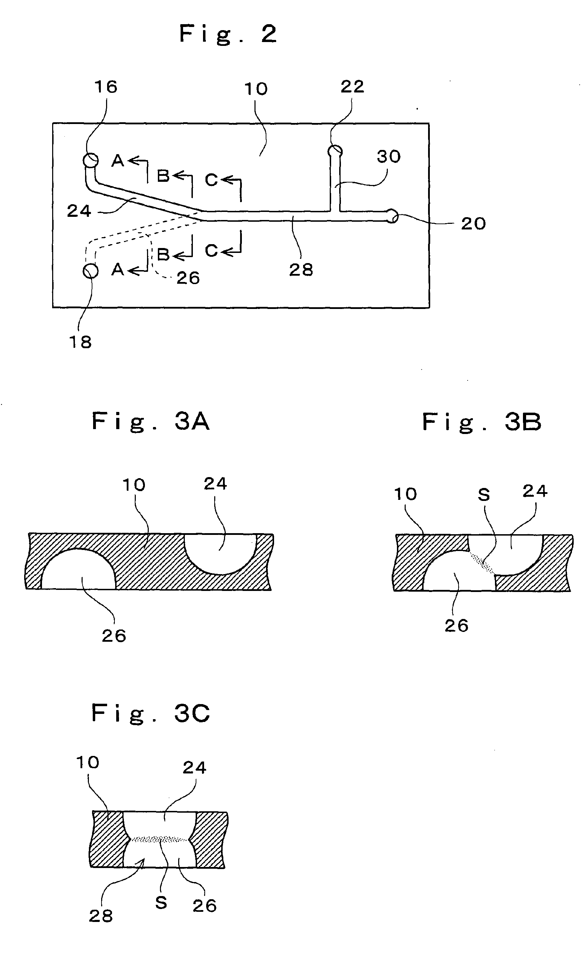

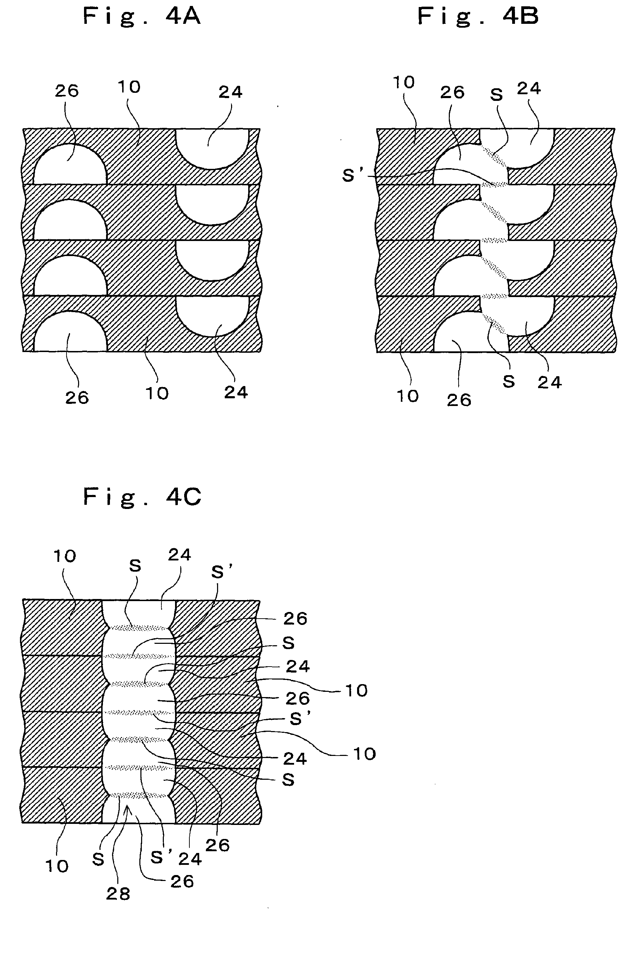

Figs. 1 to 4 shows one embodiment according to the invention. Fig. 1 is an exploded perspective view showing the schematic construction of main parts of a liquid/liquid interface reaction equipment, and Fig. 2 is a plan view showing a channel construction of a substrate (chip), being a structural element of this equipment. Figs. 3A, 3B, and 3C are a partially enlarged cross sectional view taken along the arrowed line A-A, partially enlarged cross sectional view taken along the arrowed line B―B, and partially enlarged cross sectional view taken along the arrowed line C-C of Fig. 2. Further, Fig. 4A, 4B, and 4C are partially enlarged cross sectional views in the state in which the substrates are stacked, being the cross sectional views in positions corresponding to along the lines A-A, B-B, and C-C of Fig. 2.

An essential part of this liquid/liquid reaction equipment is a laminated construction of one or plural pieces of substrates 10 (plural pieces in the illustrated example), an upper cover plate 12 in direct contact with the front face of the substrate 10 (the front face of the substrate in the uppermost position when plural pieces of substrates 10 are stacked as in the illustrated example), and a lower cover plate 14 in direct contact with the back face of the substrate 10 (the back face of the substrate 10 in the lowermost position when plural pieces of substrates 10 are stacked as in the illustrated example). The upper cover plate 12 and the substrate 10, between the substrates 10, and the substrate 10 and the lower cover plate 14 are brought in direct contact in the liquid-tight state with each other using fastenings, not shown, forming an integral whole consisting of the upper cover plate 12, plural pieces of substrates 10, and the lower cover plate 14.

A substrate 10 is made of glass, silicon, plastics, ceramics, metals, and the like. There are formed in the substrate 10 four minute through holes, and these minute through holes act as a first liquid feed port 16, a second liquid feed port 18, a liquid collection port 20, and a reaction stopping solution feed port 22. A fine bottomed groove of which one end (leading edge) communicates with the first liquid feed port 16 is formed at the front face of the substrate 10, and this bottomed groove forms a first individual channel 24. A fine bottomed groove of which one end (leading edge) communicates with the second liquid feed port 18 is formed at the back face of the substrate 10, and this bottomed groove forms a second individual channel 26. The first individual channel 24 and the second individual channel 26 are formed so as to intersect on the way, and to be overlapped each other on the downstream side from the intersection in plan view. Furthermore, the first individual channel 24 and the second individual channel 26 are made to be larger in depth dimension of respective bottomed grooves forming these channels than half the thickness dimension of the substrate 10. Therefore, the sum of depth dimensions of two bottomed grooves is larger than the thickness dimension of the substrate 10. Thus, the first individual channel 24 and the second individual channel 26 are separate channels independent of each other on the upstream side from the intersection as shown in Fig. 3A. As shown in Fig. 3B, however, the first individual channel 24 and the second individual channel 26 are brought in communication with each other to come together at the intersection, and a communication width comes to be larger by degrees in downstream direction. As shown in Fig. 3C, then, a communication width becomes the maximum on the downstream side from the intersection where the first individual channel 24 and the second individual channel 26 are overlapped with each other in plan view, a through groove is formed with two grooves at the front and back of the substrate 10, and this through groove forms a combined channel 28. A trailing edge of this combined channel 28 communicates with the liquid collection port 20. Further, there is formed in the vicinity of the trailing end of the combined channel 28, a fine bottomed groove of which one end (leading edge) communicates with the reaction stopping solution feed port 22, and of which other end (trailing edge) communicates with the combined channel 28. This bottomed groove forms a channel 30 of the reaction stopping solution. In addition, it is preferable that there is located at the substrate 10 other means for stopping the reaction at the liquid/liquid interface, for example, a cooler for cooling a liquid flowing through the combined channel 28 instead of the provision of the channel 30 of a reaction stopping solution.

Furthermore, when plural pieces of substrates 10 are stacked such that the channels 24, 26, and 28 are positioned to be overlapped each other in plan view between the substrates 10 to be in direct contact, as shown in Fig. 4A, the first individual channel 24 and the second individual channel 26 of each substrate 10 are separate channels independent of each other on the upstream side from the intersection. As shown in Fig. 4B, however, at the intersection, the first individual channel 24 and the second individual channel 26 are brought in communication with each other to join at each substrate 10, and a communication width comes to be larger by degrees in downstream direction as described above. In addition, between the substrates 10 adjacent to each other in the laminated direction, the second individual channel 26 of the substrate 10 on the upper side, and the first individual channel 24 of the substrate 10 on the lower side are brought in communication with each other to join, and a communication width comes to be larger by degrees in downstream direction. As shown in Fig. 4C, then, on the downstream side from the intersection where the first individual channel 24 and the second individual channel 26 are overlapped each other in plan view, each communication width becomes the maximum, through grooves are formed with two grooves at the front and back of respective substrates 10 are formed, and these through grooves form the combined channels 28 respectively. Moreover, the combined channels 28 are brought in communication with each other between the substrates adjacent to each other in the laminated direction to form a combined channel including a large channel cross section over the entire laminate of plural pieces of substrates 10.

The upper cover plate 12 and the lower cover plate 14 are made of, e.g., stainless steel or plastics respectively. Three minute through holes are formed in the upper cover plate 12. These minute through holes act as a first liquid feed passage 32, a second liquid feed passage 34, and a reaction stopping solution feed passage 36. To the first liquid feed passage 32, the second liquid feed passage 34, and the reaction stopping solution feed passage 36, a first liquid feed tube 38, a second liquid feed tube 40, and a reaction stopping solution feed tube 42 are connected in communication respectively. Furthermore, when the upper cover plate 12 is brought in direct contact with the front face of the substrate 10, the first liquid feed passage 32, the second liquid feed passage 34 and the reaction stopping solution feed passage 36 are brought in communication with the first liquid feed port 16, the second liquid feed port 18, and the reaction stopping solution feed port 22 respectively. Moreover, one minute through hole is formed in the lower cover plate 14, and this minute through hole acts as a liquid discharge passage 44. To the liquid discharge passage 44, a liquid discharge tube 46 is connected in communication. Further, when the lower cover plate 14 is brought in direct contact with the back face of the substrate 10, the liquid discharge passage 44 will be brought in communication with the liquid collection port 20 of the substrate 10.

When two kinds of liquids are made to react at the liquid/liquid interface with the use of a liquid/liquid interface reaction equipment constructed as described above, a first liquid and a second liquid, for example, two kinds of an organic solvent and water are put individually into the first liquid feed port 16 and the second liquid feed port 18 of the substrate 10 through the first liquid feed passage 32 and the second liquid feed passage 34 of the upper cover plate 12 respectively using a micro-syringe, micro-pump, micro-valve, or the like. The first liquid and the second liquid having been put in respective liquid feed ports 16 and 18 flow in the first individual channel 24 and the second individual channel 26 of the substrate 10 respectively, are joined at the intersection of the first individual channel 24 and the second individual channel 26, and flow in a laminar flow state respectively in the combined channel 28. As shown in Fig. 3C, then, a liquid/liquid interface S of two-layer flow is formed in the combined channel 28, and the reaction between ingredients in the first liquid and ingredients in the second liquid gets on at this liquid/liquid interface S. Furthermore, when plural pieces of substrates 10 are stacked, between the substrates adjacent to each other in the laminated direction, the second liquid flowing in the second individual channel 24 of the upper side substrate 10, and the first liquid flowing in the first individual channel 24 of the lower side substrate 10 are joined at the intersection of the second individual channel 26 and the first individual channel 24, and flow in the laminar flow states respectively in the combined channel 28. As shown in Fig. 4C, then, a liquid/liquid interface S' is formed in the combined channel 28, and the reaction between ingredients in the second liquid and ingredients in the first liquid gets on as well.

In this case, the first individual channel 24 and the second individual channel 26 of the substrate 10 are joined in thickness direction of the substrate 10, so that an angle at which these individual channels 24 and 26 are intersected (angle in a plane orthogonal to the liquid/liquid interface S) is approximately 0° . Moreover, when plural pieces of substrate 10 are stacked, between the substrates 10 adjacent to each other in the laminated direction, the second individual channel 26 of the upper side substrate 10 and the first individual channel 24 of the lower side substrate 10 are joined in thickness direction of the substrate 10, so that an angle at which these individual channels 26 and 24 are intersected (angle in a plane orthogonal to the liquid/liquid interface S') is 0°. Accordingly, abrupt changes in flow rate or in flow direction when the first and second liquids are joined are suppressed, preventing the production of solids and thus the occurrence of clogging in the channels.

When the first liquid and the second liquid flow in the laminar flow states respectively in the combined channel 28 to reach the communicating portion with the reaction stopping solution channel 30, a reaction stopping solution having been fed to the reaction stopping solution feed port 22 of the substrate 10 through the reaction stopping solution feed passage 36 of the upper cover plate 12 from the reaction stopping solution feed tube 42 flows in the combined channel 28 through the channel 30, whereby the reaction at the liquid/liquid interface of the first liquid ingredients and the second liquid ingredients is stopped. Subsequently, the liquid including the reaction products flows out of the trailing edge of the combined channel 28, gets through the liquid collection port 20, flows in the liquid discharge passage 44 of the lower cover plate 14, and is discharged through the liquid discharge tube 46.

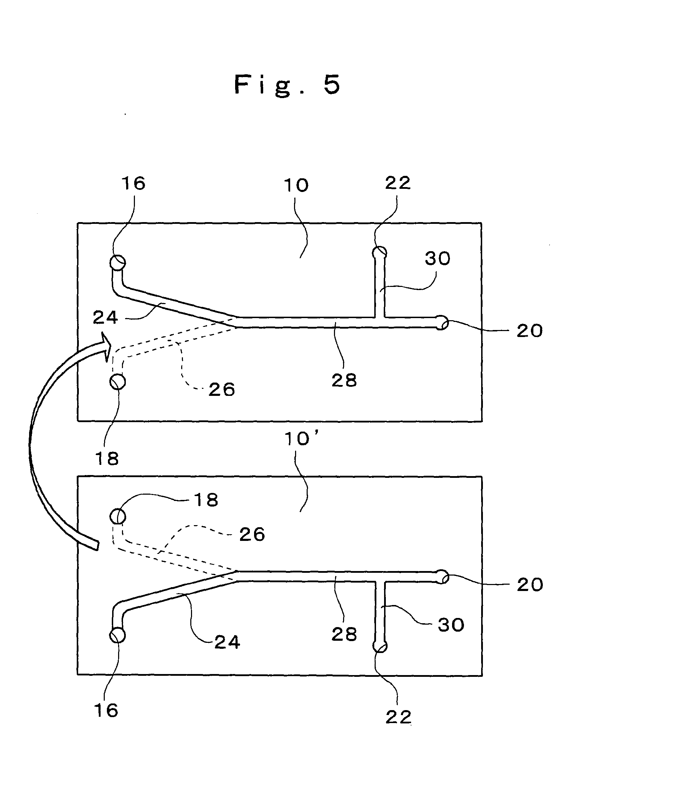

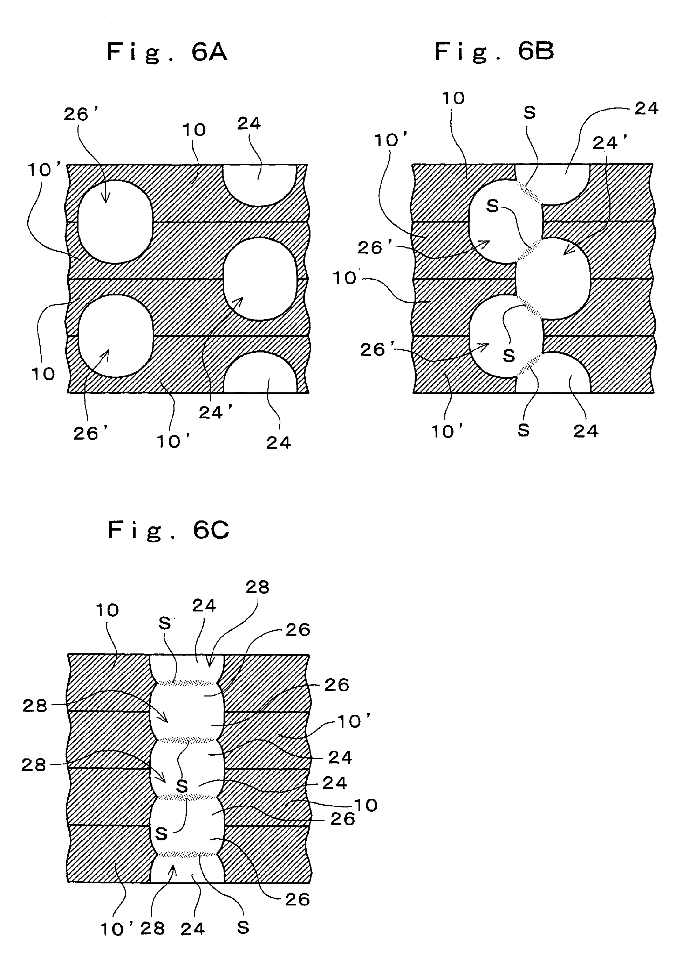

In the mentioned embodiment, plural pieces of substrates 10 having the same construction are stacked. As shown in Fig. 5, however, it is preferable that there are prepared a substrate 10 including the mentioned construction, and a substrate 10' including the construction symmetric with respect to this substrate 10, and plural pieces of these alternately stacked substrates 10 and 10' are stacked to be in direct contact with the front faces thereof and the back faces thereof are opposed to each other. In the liquid/liquid interface reaction equipment of such construction, as are shown partially enlarged cross sectional views in positions corresponding to along the lines A-A, B-B, and C-C of Fig. 2 in Figs. 6A, 6B, and 6C respectively, between the substrates 10 and 10' adjacent to each other in the laminated direction, the second individual channel 26 of the upper side substrate 10 and the second individual channel 26 of the lower side substrate 10' are mutually in communication; and the first individual channel 24 of the upper side substrate 10' and the first individual channel 24 of the lower side substrate 10 are mutually in communication. Thus, there will be formed the first individual channel 24' and the second individual channel 26' including double the channel cross-sections respectively. Further, in each substrate 10, as described in the mentioned equipment, the first individual channel 24 and the second individual channel 26, as shown in Fig. 6A, are separate channels independent of each other on the upstream side from the intersection; as shown in Fig. 6B, they communicate with each other to join at the intersection; and as shown in Fig. 6C, they form the combined channel 28 on the downstream side from the intersection. In addition, the liquid/liquid interface S is formed in the combined channel 28, and the reaction between ingredients in the first liquid and ingredients in the second liquid gets on at this liquid/liquid interface S.

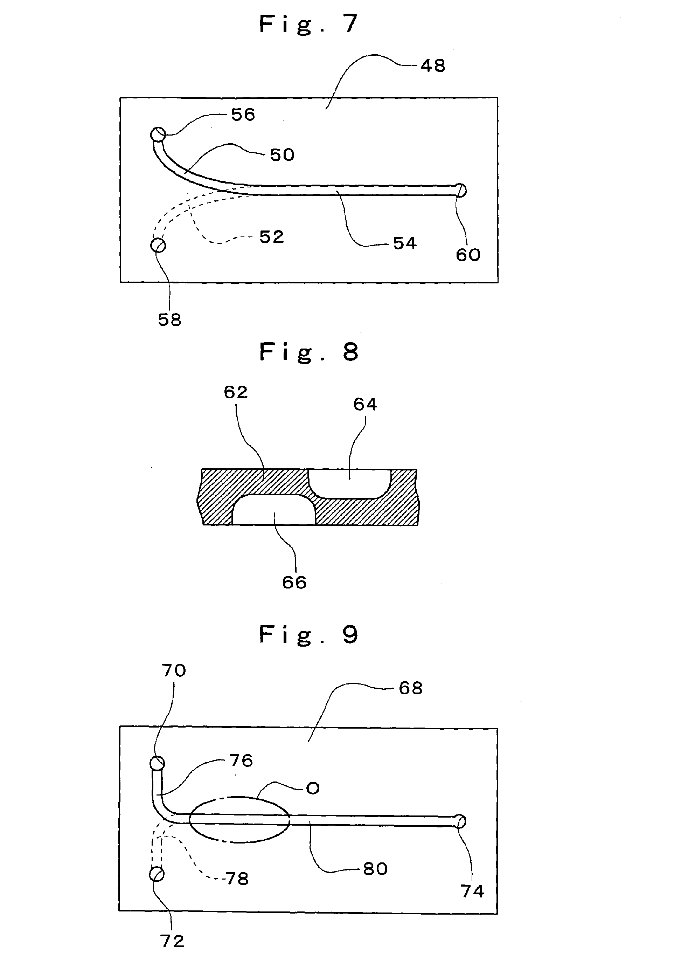

In the substrate 10 shown in Fig. 2, the first individual channel 24 and the second individual channel 26 are intersected at an acute angle in plan view. In such construction, it becomes possible to cause a different interface reaction to occur by changing an angle at which the first individual channel 24 and the second individual channel 26 are intersected. As is a plan view shown in Fig. 7, however, it is preferable that a first individual channel 50 and a second individual channel 52 to be formed in a substrate 48 are formed to be arch-shaped in plan view respectively, and a combined channel 54 is extended in direction of a tangent line of each of the individual channels 50 and 52. In the case of such construction, pressure loss comes to be smaller, thus enabling the smooth interface reaction. Reference numerals 56, 58 in Fig. 7 designate a first liquid feed port and a second liquid feed port, and numeral 60 designates a liquid collection port.

Furthermore, in the substrate 10 shown in Figs. 3A, 3B, and 3C, the cross sectional shapes of each of the individual channel 24, 26 are ellipses respectively. As is shown in a partially enlarged cross sectional view of Fig. 8, however, it is preferable that the cross sectional shapes of the first individual channel 64 and the second individual channel 66 that are formed in a substrate 62 are ovals, or any other cross sectional shape respectively.

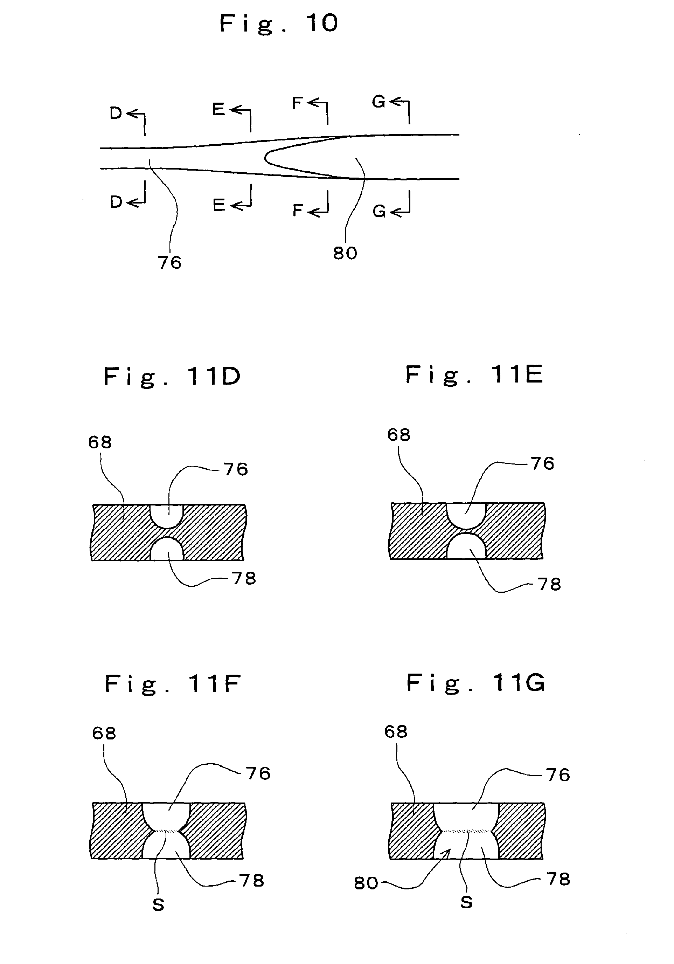

Now, Figs. 9 to 11 show another embodiment according to the invention. Fig. 9 is a plan view showing the channel construction of a substrate, being a structural element of the liquid/liquid interface reaction equipment. Fig. 10 is an enlarged plan view of O part of Fig. 9. Figs. 11D-11G are a partially enlarged cross sectional view taken along the arrowed line D-D, a partially enlarged cross sectional view taken along the arrowed line E-E, a partially enlarged cross sectional view taken along the arrowed line F-F, and a partially enlarged cross sectional view taken along the arrowed line G-G.

In a substrate 68 of this equipment, there are formed three minute through holes acting as a first liquid feed port 70, a second liquid feed port 72, and a liquid collection port 74. At the front face of the substrate 68, a first individual channel 76 of a fine bottomed groove of which one end (leading edge) communicates with the first liquid feed port 70 is formed. At the back face of the substrate 68, a second individual channel 78 of a fine bottomed groove of which one end (leading edge) communicates with the second liquid feed port 72 is formed. The first individual channel 76 and the second individual channel 78 are formed so as to be overlapped each other on the way in plan view. Further, the first individual channel 76 and the second individual channel 78 are formed so as to be larger in channel cross section in downstream direction at the O part of Fig. 9 as shown in Figs. 10 and Figs. 11D-11G. That is, the bottomed grooves that form the first individual channel 76 and the second individual channel 78 are respectively smaller in depth dimension than half the thickness dimension of the substrate 68 on the upstream side of the O part. However, the depth dimensions (also width dimensions) become larger in downstream direction, and the depth dimensions become larger than half the thickness dimension of the substrate 68 on the downstream side of the O part. Therefore, the sum of depth dimensions of two bottomed grooves becomes larger than the thickness dimension of the substrate 68. Thus, although the first individual channel 76 and the second individual channel 78, as shown in Fig. 11D, are separate channels independent of each other on the upstream side of the O part side, as shown in Fig. 11E, the bottoms thereof come closer to each other by degrees in the downstream direction; as shown in Fig. 11F, shortly the bottoms communicate with each other; and as shown in Fig. 11G, a communication width becomes the maximum on the more downstream side of the O part to form a through groove with two grooves at the front and back of the substrate 68, and this through groove forms a combined channel 80. The trailing edge of this combined channel 80 communicates with a liquid collection port 60.

In the substrate 68 constructed as described above, the first liquid and the second liquid having been put in the liquid feed ports 70 and 72 flow separately in the first individual channel 76 and the second individual channel 78 respectively, are joined at the intersection of the first individual channel 76 and the second individual channel 78, and flow in the laminar states respectively in the combine channel 80. As shown in Fig. 11G, then, a liquid/liquid interface S of two-layer flow is formed in the combined channel 80, and the reaction between ingredients in the first liquid and ingredients in the second liquid gets on. In this case, the first individual channel 76 and the second individual channel 78 are intersected in thickness direction of the substrate 68 to be joined, and the combined channel 80 is formed. Accordingly, it is possible to make an angle at which both of the individual channels 76 and 78 extremely small. Consequently, abrupt changes in flow rate or in flow direction when the first and second liquids are joined are suppressed, preventing the production of solids and thus the occurrence of clogging in the channels.

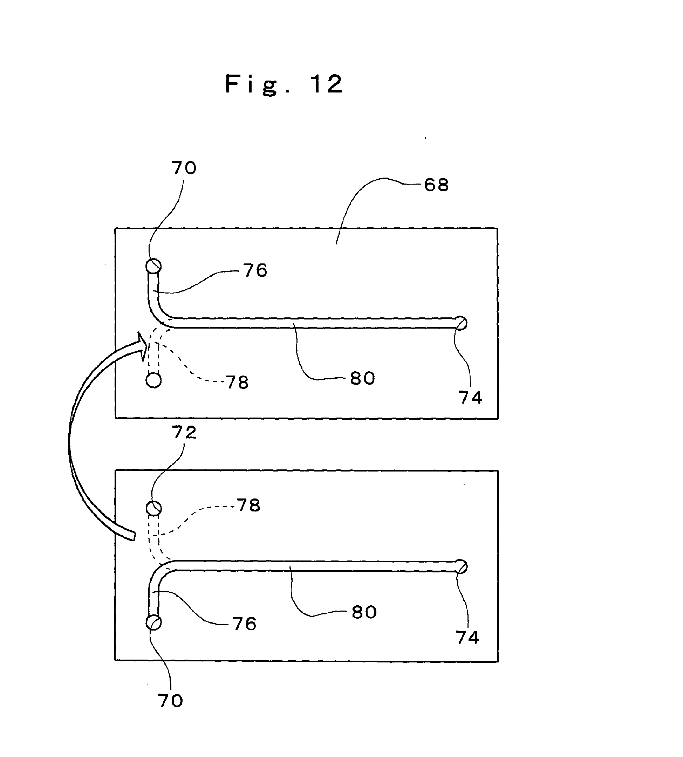

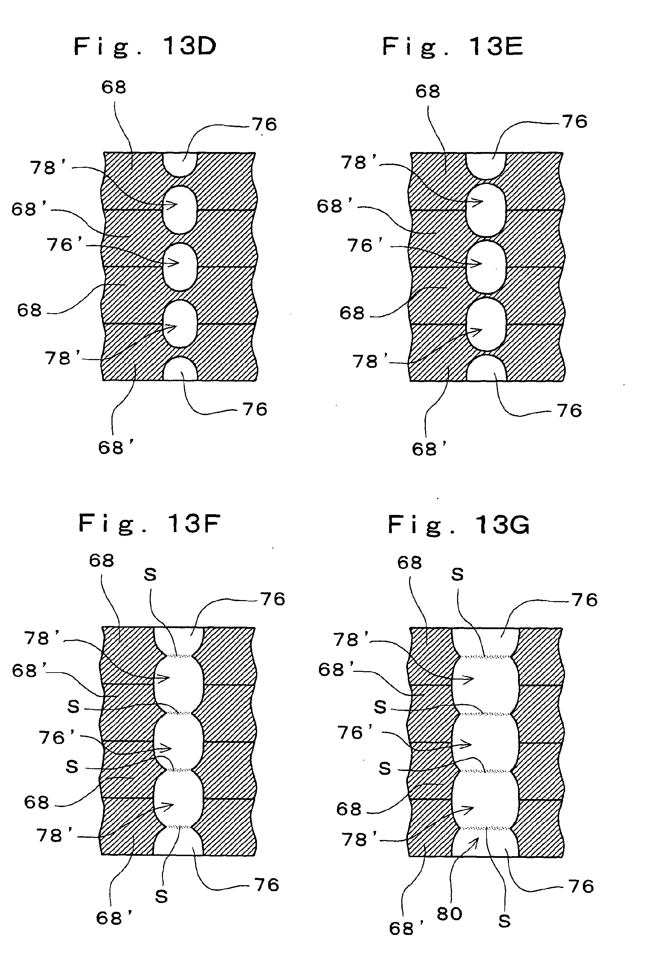

In addition, as shown in Fig. 12, it is preferable that there are prepared a substrate 68 including the mentioned construction and a substrate 68' including the construction symmetric with respect to this substrate 168, and that plural pieces of alternately stacked substrates 68 and 68' are stacked to be in direct contact with the front faces thereof and the back faces thereof are opposed to each other respectively. In the liquid/liquid interface reaction equipment of such construction, as are shown partially enlarged cross sectional views in positions corresponding to along the lines D-D, E-E, F-F, and G-G of Fig. 10 in Figs. 13D through 13G, between the substrates 68 and 68' adjacent to each other in the laminated direction, the second individual channel 78 of the upper side substrate 68 and the second individual channel 78 of the lower side substrate 68' are mutually in communication; and the first individual channel 76 of the upper side substrate 68' and the first individual channel 76 of the lower side substrate 68 are mutually in communication. Thus, there will be formed a first individual channel 76' and a second individual channel 78' including double the channel cross-sections respectively. Moreover, in each substrate 68, as described above, a liquid/liquid interface S of two-layer flow is formed in the combined channel 80, and the reaction between ingredients in the first liquid and ingredients in the second liquid gets on at this liquid/liquid interface S.

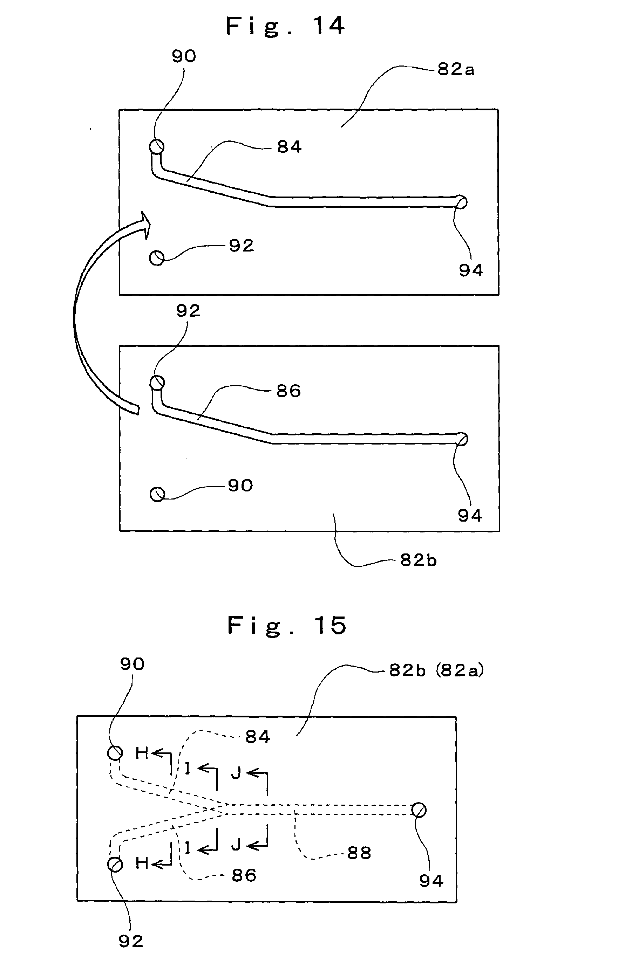

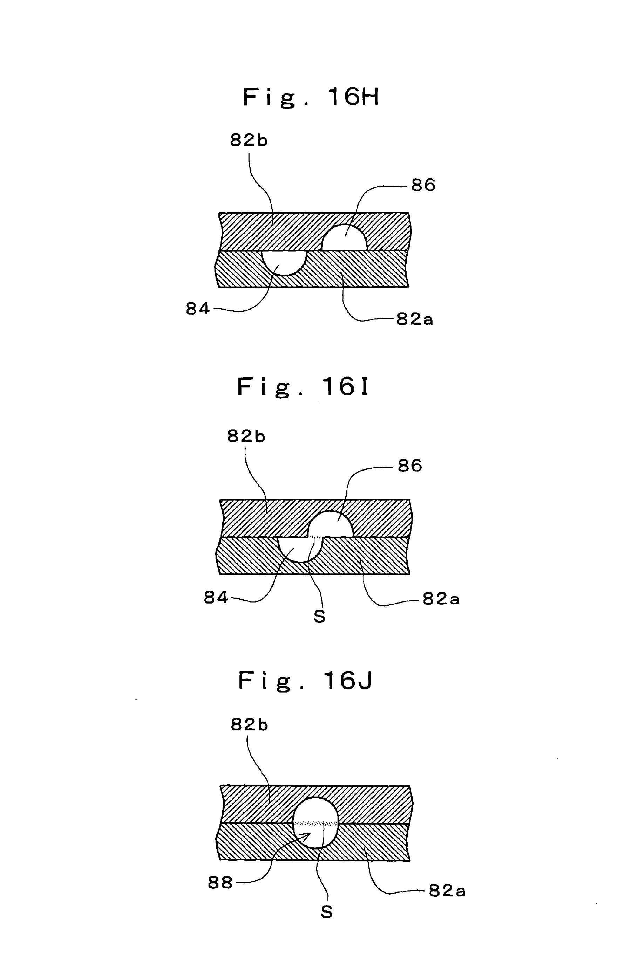

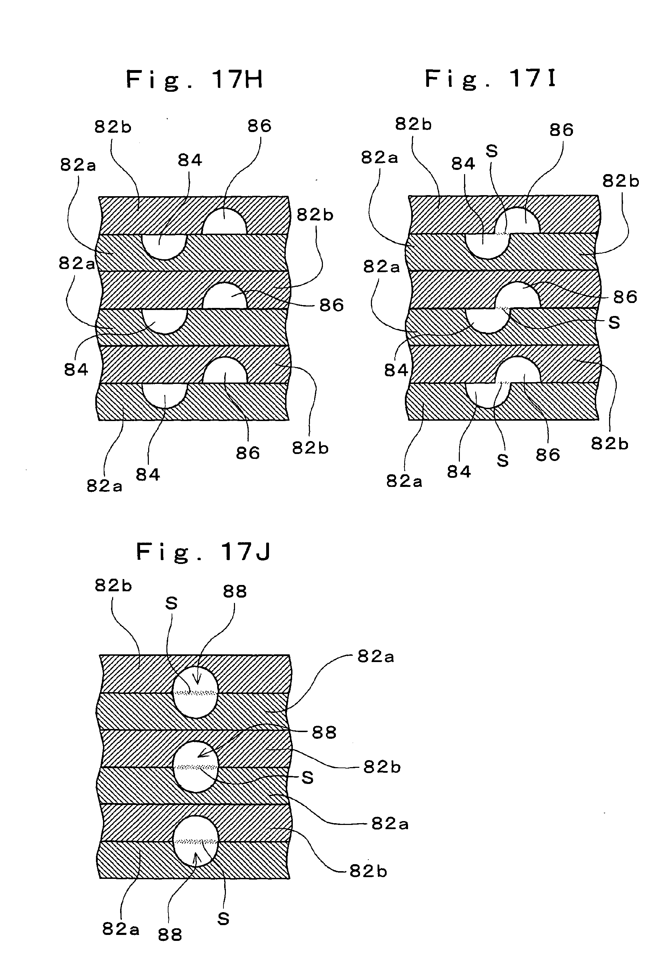

Now, Figs. 14 to 17 show a further embodiment according to the invention that includes a construction different from those as mentioned above. Fig. 14 is a plan view showing a channel construction of a substrate, being a structural element of the liquid/liquid interface reaction equipment. Fig. 15 is a plan view showing the state in which two pieces of substrates are overlapped. Figs. 16H, 16I, and 16J are a partially enlarged cross sectional view taken along the arrowed line H-H, a partially enlarged cross sectional view taken along the arrowed line I-I, and a partially enlarged cross sectional view taken along the arrowed line J-J. Further, Figs. 17H, 17I, 17J are partially enlarged cross sectional views in the state in which the substrates are stacked, being cross sectional views in positions corresponding to along the line H-H, the line I-I, and the line J-J of Fig. 15.

In this equipment, two pieces of substrates 82a and 82b are overlapped to form a first individual channel 84, a second individual channel 86, and a combined channel 88. Although both of the substrates 82a and 82b have the same construction, a bottomed groove that is formed at the front face of one substrate 82a forms the first individual channel 84, and a bottomed groove that is formed at the front face of the other substrate 82b forms the second individual channel 86. Further, two pieces of substrates 82a and 82b are brought in direct contact with the front faces at which the bottomed grooves are formed opposed to each other to form the combined channel 88.

There are formed in one substrate 82a three minute through holes, and these minute through holes act as a first liquid feed port 90, a second liquid feed port 92, and a liquid collection port 94 respectively. One end (leading edge) of the first individual channel 84 communicates with the first liquid feed port 90. Furthermore, there are formed in the other substrate 82b three minute through holes, and these minute through holes act as the first liquid feed port 90, the second liquid feed port 92, and the liquid collection port 94 respectively. One end (leading edge) of the second individual channel 86 communicates with the second liquid feed port 92. The first individual channel 84 and the second individual channel 86, when two pieces of substrates 82a and 82b are brought in direct contact, as shown in Fig. 15, are formed to intersect on the way in plan view to be overlapped each other on the downstream side from the intersection. Further, the portion at which the individual channel 84 and the second individual channel 86 are overlapped each other to join on the downstream side from the intersection thereof is the combined channel 88.

In the state in which two pieces of substrate 82a and 82b are in direct contact, the first individual channel 84 and the second individual channel 86 are separate channels independent of each other on the upstream side from the intersection as shown in Fig. 16H. As show in Fig. 16I, however, the first and second individual channels are brought in communication with each other to join at the intersection, and a communication width comes to be larger by degrees in downstream direction. As shown in Fig. 16J, on the downstream side from the intersection where the first individual channel 84 and the second individual channel 86 are overlapped in plan view, the communication width becomes the maximum to form the combined channel 88. The trailing edge of this combined channel 88 communicates with the liquid collection port 94.

In the substrates 82a and 82b constructed as described above and integrally brought in direct contact, the first liquid and the second liquid having been put in respective liquid feed ports 90 and 92 flow separately in the first individual channel 84 and the second individual channel 86 respectively; the first individual channel 84 and the second individual channel 86 are intersected in plan view to join; and the first liquid and the second liquid flow in the laminar states respectively in the combined channel 88. As shown in Fig. 16J, then, a liquid/liquid interface S of two-layer flow is formed in the combined channel 88, and the reaction between ingredients in the first liquid and ingredients in the second liquid gets on at this liquid/liquid interface S. In this case, the first individual channel 84 and the second individual channel 86 are joined at the faces where two pieces of substrates 82a and 82b are in direct contact, so that an angle at which both of the individual channels 84 and 86 are intersected (angle in a plan orthogonal to the liquid/liquid interface S) is 0° . Consequently, abrupt changes in flow rate or in flow direction when the first and second liquids are joined are suppressed, preventing the production of solids and thus the occurrence of clogging in the channels.

In addition, as shown in Figs. 17H, 17I, and 17J, plural pieces of substrates can be constructed to stack in direct contact in sets of the substrates 82a and 82b integrally adhered as mentioned above. In the liquid/liquid interface reaction equipment of such construction, in each set of the substrates 82a and 82b, a liquid/liquid interface S of two-layer flow is formed in the combined channel 88 as mentioned above, and the reaction between ingredients in the first liquid and ingredients in the second liquid gets on at this liquid/liquid interface S.

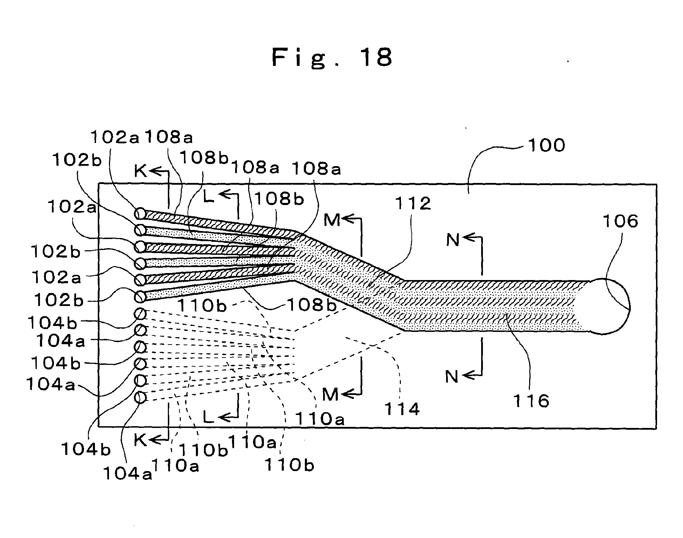

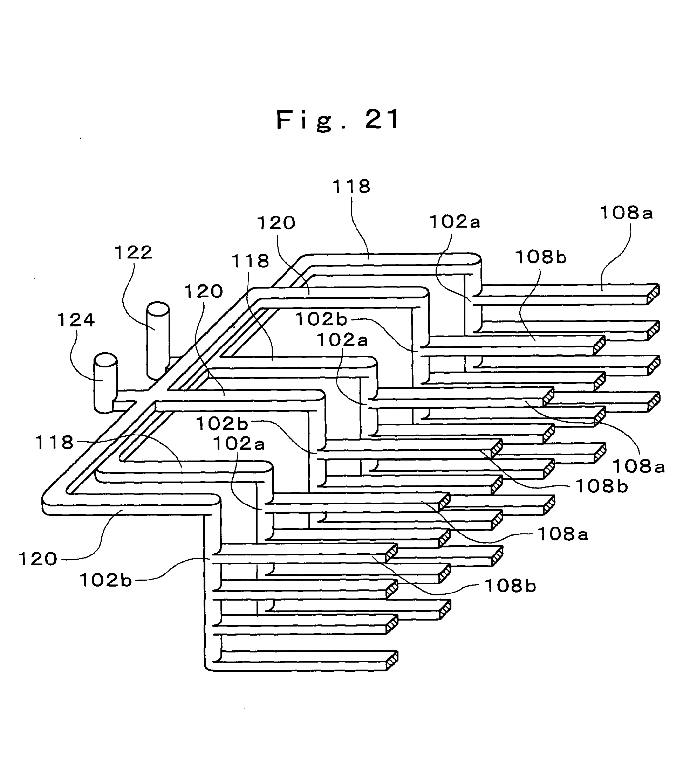

In each of the mentioned embodiments, the first individual channel through which the first liquid flows is formed at the front face of a substrate, and the second individual channel through which the second liquid flows is formed at the back face of the substrate respectively; or the first individual channel through which the first liquid flows is formed at one face on the opposed side of one substrate of one set of substrates to be overlapped each other is formed, and the second individual channel through which the second liquid flows at one face on the opposed side of the other substrate is formed. However, in addition to these constructions, it is preferable that there are provided on the same one face of a substrate one set or plural sets of the fist individual channel through which the first liquid flows and the second individual channel through which the second liquid flows, the first individual channel and the second individual channel are made to join in one face of the substrate to from a laminar flow of liquid/liquid interface is formed in this combined channel, and the first liquid and the second liquid are made to react with each other also at this liquid/liquid interface. Such an embodiment is shown in Fig. 18 or 21.

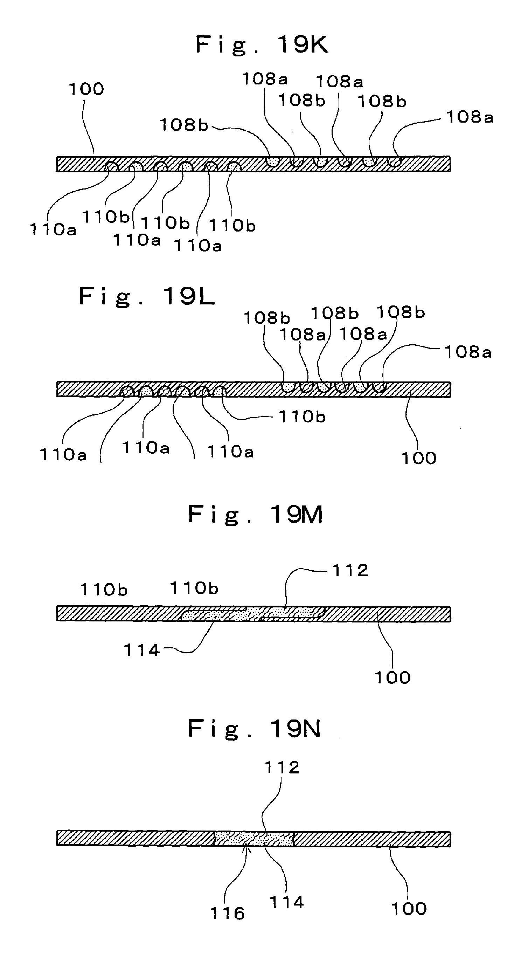

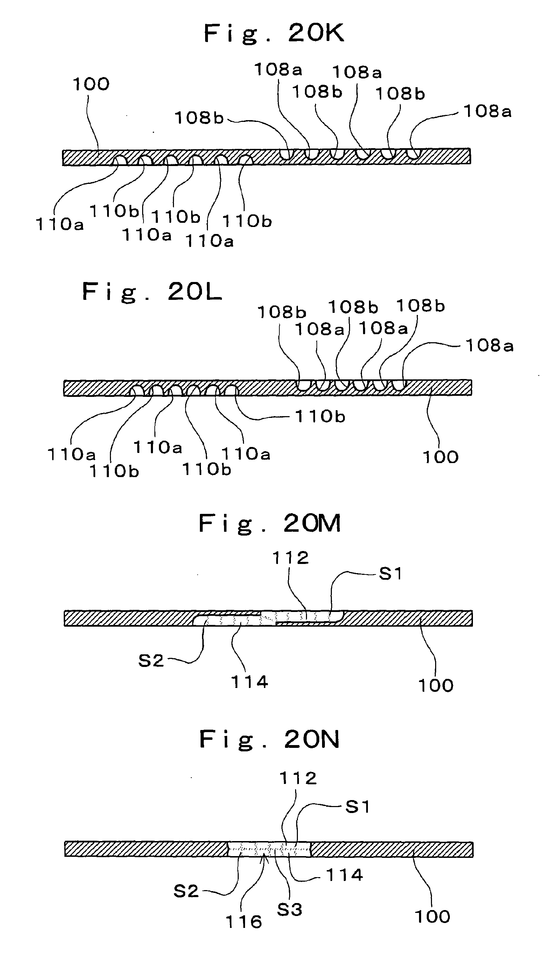

Fig. 18 is a plan view showing the channel construction of a substrate (chip), being a structural element of the liquid/liquid interface reaction equipment. Figs. 19K, 19L, 19M and 19N, and Figs. 20K, 20L, 20M and 20N are partially enlarged cross sectional views taken along the arrowed line K-K, partially enlarged cross sectional views taken along the arrowed line L-L, partially enlarged cross sectional views taken along the arrowed line M-M, and partially enlarged cross sectional views taken along the arrowed line N-N. With reference to Fig. 18 and Figs. 19K to 19N, the first liquid and the second liquid flowing through the channels are shown with different fills. Furthermore, Fig. 21 is a partially perspective view showing the structure of the channels. Fig. 21 omits the illustration of plural pieces of substrates or cover plates to show only the channels, and shows just the channels only at one face (front face) of the substrate to omit the illustration of the channels at the other face (back face) of the substrate.

This liquid/liquid interface reaction equipment, not shown, as in the liquid/liquid interface reaction equipment shown in Fig. 1, is constructed of one or plural pieces of substrates 100, an upper cover plate, and a lower cover plate, a first liquid feed tube, a second liquid feed tube, and a liquid discharge tube. There are formed in the substrate 100 minute through holes of plural (six in the illustrated example) first liquid feed ports 102a and 104b and plural (six in the illustrated example) second liquid feed ports 102b and 104b respectively. The first liquid feed ports 102a and the second liquid feed ports 102b that are located at the upper half in Fig. 18 are disposed at regular intervals alternately, and the first liquid feed ports 104a and the second liquid feed ports 104b that are located at the lower half in Fig. 18 are disposed at regular intervals alternately, as well as disposed in reverse order with respect to the first liquid feed ports 102a and the second liquid feed ports 102b at the upper half. There is provided in the substrate 100 a liquid collection port 106 of a large dimensioned through hole.

There are provided at the front face of the substrate 100 plural sets (three sets in the illustrated example) of the first individual channels 108a and the second individual channels 108b of fine bottomed grooves of which one ends (leading edges) communicate with the first liquid feed ports 102a and the second liquid feed ports 102b respectively. Moreover, there are also provided at the back face of the substrate 100 plural sets (three sets in the illustrated example) of the first individual channels 110a and the second individual channels 110b of fine bottomed grooves of which one ends (leading edges) communicate with the first liquid feed ports 104a and the second liquid feed ports 104b respectively. The first individual channels 108a and the second individual channels 108b that are formed on the front face side of the substrate 100, and the first individual channels 110a and the second individual channels 110b that are formed on the back face side of the substrate 100 are disposed so as not to be overlapped at all with each other in plan view. Therefore, as shown in Figs. 19K and 19L, the first individual channels 108a and the second individual channels 108b, and the first individual channels 110a and the second individual channels 110b are separate channels independent of each other. Further, three sets of the first individual channels 108a and the second individual channels 108b that are formed at the front face of the substrate 100 communicate with one front-side combined channel 112 of a wide bottomed groove. Moreover, three sets of the first individual channels 110a and the second individual channels 110b that are formed at the back face of the substrate 100 communicate with one backside combined channel 114 of a wide bottomed groove.

The front-side combined channel 112 and backside combined channel 114 are formed so as to intersect on the way to be overlapped each other on the downstream side from the intersection thereof. Furthermore, the first individual channels 108a and 110a and the second individual channels 108b and 110b, as well as the front-side combined channel 112 and the backside combined channel 114 are constructed to be larger in depth dimension of each of the bottomed grooves thereof than half the thickness dimension of the substrate 100. Therefore, the sum of depth dimensions of each bottomed groove that is formed at the front face of the substrate 100, and each bottomed groove that is formed at the back face of the substrate 100 is larger than the thickness dimension of the substrate 100. Thus, although the front-side combined channel 112 and the backside combined channel 114 are separate channels independent of each other on the upstream side from the intersection, as shown in Fig. 19M, they are partially in communication with each other to join at the intersection, and a communication width comes to be larger by degrees in downstream direction. As shown in Fig. 19N, on the downstream side from the intersection where the front-side combined channel 112 and the backside combine channel 114 are absolutely overlapped each other in plan view, the communication width becomes the maximum to form a through groove with two groove at the front and back of the substrate 100, and this through groove forms a front-back combined channel 116. The trailing edge of this front-back combined channel 116 communicates with a liquid collection port 106. Furthermore, the illustration of a reaction stopping solution feed port or a reaction stopping liquid channel, or a cooler as an alternative thereof is omitted.

In addition, when plural pieces of substrates 100 are stacked to be in direct contact such that the channels 108a, 108b, 110a, 110b, 112, 114, 116 are positioned to be overlapped in plan view respectively between the substrates 100, as in the above-described case on the basis of Figs. 4A, 4B, and 4C, between the substrates 100 adjacent to each other in the laminated direction, the backside combined channel 114 of the upper-side substrate 100 and the front-side combined channel 112 of the lower-side substrate 100 are brought in communication with each other on the way to join. However, the detailed description thereof will be omitted herein.

To feed the first liquid and the second liquid to plural numbers of the first liquid feed ports 102a (104a) and the second liquid feed ports 102b (104b), it is preferable to be of the following channel structure. In this channel structure, for example, as shown in Fig. 21, a flat board (not shown) in which a branch channel 118 causing the first liquid to be branched to flow and a branch channel 120 causing the second liquid to be branched to flow are formed respectively, is superimposed on a substrate 100; the first liquid and the second liquid to be fed through a first liquid feed passage 122 and a second liquid feed passage 124 are branched to flow by means of each of the branch channels 118 and 120 respectively; and the first liquid is made to flow from each of the branch channels 118 to each of the first liquid feed ports 102a respectively, as well as the second liquid is made to flow from each of the branch channels 120 to each of the second liquid feed ports 102b respectively. In the liquid/liquid interface reaction equipment provided with a substrate 100 including the mentioned construction, on the front side of the substrate 100, the first liquid and the second liquid having been put in the first liquid feed ports 102a and the second liquid feed ports 102b, as shown in Figs. 20K and 20L, flow separately in the first individual channels 108a and the second individual channels 108b respectively, are joined at the portion where the first individual channels 108a and the second individual channels 108b are intersected at an acute angle, and flow in the laminar flow states respectively in the front-side combined channel 112. As shown in Fig. 20M, then, a liquid/liquid interface S1 between the laminar flows is formed in the front-side combined channel 112, and the reaction between ingredients in the first liquid and ingredients in the second liquid gets on at this liquid/liquid interface S1. Further, also on the backside of the substrate 100, the first liquid and the second liquid having been put in the first liquid feed ports 104a and the second liquid feed ports 104b, as shown in Figs. 20K and 20L, flow separately in the first individual channels 110a and the second individual channels 110b respectively, are joined at the portion where the first individual channels 110a and the second individual channels 110b are intersected at an acute angle, and flow in the laminar flow states respectively in the backside combined channel 114. As shown in Fig, 20M, then, a liquid/liquid interface S2 between the laminar flows is formed in the backside combined channel 114, and the reaction between ingredients in the first liquid and ingredients in the second liquid gets on at this liquid/liquid interface S2.

In addition, the first liquid and the second liquid having flowed separately in the laminar flow states in the front-side combined channel 112 and the backside combined channel 114 of the substrate 100 respectively are joined at the portion where the front-side combined channel 112 and the backside combined channel 114 are intersected, and flow in the laminar flow states respectively in the front-back combined channel 116. As shown in Fig. 20N, then, a liquid/liquid interface S3 between the upper and lower laminar flows is formed in the front-back combined channel 116, and the reaction between ingredients in the first liquid and ingredients in the second liquid gets on also at this liquid/liquid interface S3. In case of a long distance from the position in which the first individual channels 108a and 110a and the second individual channels 108b and 110b are joined to the position in which the front side-combined channel 112 and the backside combined channel 114 are joined, there will be a difference between a reaction time at the liquid/liquid interfaces S1 and S2, and a reaction time at the liquid/liquid interface S3. Thus, it is desirable to make the mentioned distance as small as possible.

In this case, by causing the angle, which the first individual channel 108a makes with the second individual channel 108b on the front side of the substrate, and the angle, which the first individual channel 110a makes with the second individual channel 110b on the backside of the substrate 100, to be as small as possible, abrupt changes in flow rate or in flow direction when both the first and second liquids are joined are suppressed, suppressing the production of solids and thus the occurrence of clogging in the channels. Whereas, the front-side combined channel 112 and the backside combined channel 114 are joined in thickness direction of the substrate 100, so that an angle at which these combined channels 112 and 114 are intersected (angle in a plane orthogonal to a liquid/liquid interface S3) will be substantially 0° . Consequently, abrupt changes in flow rate or in flow direction when both the first and second liquids are joined are suppressed, suppressing the production of solids and thus the occurrence of clogging in the channels.

Furthermore, making the sum of cross sections of three sets of the first individual channels 108a and the second individual channels 108b that are formed on the front side of the substrate 100 substantially equal to the cross section of the front-side combined channel 112, likewise making the sum of cross sections of three sets of the first individual channels 110a and the second individual channels 110b that are formed on the backside of the substrate 100 substantially equal to the cross section of the backside combined channel 114, and further making the sum of cross sections of the front-side combined channel 112 and the backside combined channel 114 roughly equal to the cross section of the front-back combined channel 116, there will be no change in flow rate before and after the joining of respective channels, thus enabling the stable reaction between ingredients in the first liquid and ingredients in the second liquid to occur.

The first liquid and the second liquid flow in the laminar flow state respectively in the front-back combined channel 116, and the reaction between ingredients in the first liquid and ingredients in the second liquid is stopped in the vicinity of the trailing end of the front-back combined channel 116. Thereafter, the liquid including reaction products flows out of the trailing edge of the front-back combined channel 116, and is discharged through the liquid collection port 106. Moreover, in this substrate 100, the liquid/liquid interface S3 between upper and lower laminar flows is formed in the front-back combined channel 116; as well as the liquid/liquid interfaces S1 and S2 between laminar flows are formed also in the front-side combined channel and the backside combined channel 114. In this manner, the reaction between ingredients in the first liquid and ingredients in the second liquid gets on at a number of liquid/liquid interfaces S1, S2, S3, so that it is possible to make the highly efficient reaction in a short time period, and thus to obtain a large amount of reaction products at one time. In addition, when plural pieces of substrates 100 are stacked, matrix-like liquid/liquid interfaces will be formed, resulting in higher yield efficiency of reaction products at the liquid/liquid interfaces.

While the presently preferred embodiments of the present invention have been shown and described. It is to be understood that these disclosures are for the purpose of illustration and that various changes and modifications may be made without departing from the scope of the invention as set forth in the appended claims.

## Claims

1. A liquid/liquid interface reaction equipment in which different kinds of liquids are made to flow in different individual channels (24), (26) respectively, said different individual channels (24), (26) are met each other on the way to form a liquid/liquid interface (S) of laminar flow in a combined channel (28), and said different kinds of liquids are reacted with each other at said liquid/liquid interface (S); **characterized in that**
there are formed grooves at the front face and the back face of a substrate (10) respectively, and said grooves form said different individual channels (24), (26); and
the sum of depth dimensions of each of said grooves that are formed at the front face and at the back face of the substrate (10) respectively is made larger than a thickness dimension of the substrate (10) ; and said grooves are intersected in plan view to cause said different individual channels (24), (26) to meet each other in thickness direction of the substrate (10).

2. A liquid/liquid interface reaction equipment in which different kinds of liquids are made to flow in different individual channels (76), (78) respectively, said different individual channels (76), (78) are met each other on the way to form a liquid/liquid interface (S) of laminar flow in a combined channel (10), and said different kinds of liquids are reacted with each other at said liquid/liquid interface (S); **characterized in that**
there are formed grooves at the front face and the back face of a substrate (68) respectively, and said grooves form said different individual channels (76), (78); and
the groove depth of one or both of said grooves that are formed at the front face and at the back face of the substrate (68) respectively is made to be larger by degrees in downward direction; and said grooves are intersected in thickness direction of the substrate (68) to cause said different individual channels (76), (78) to meet each other.

3. The liquid/liquid interface reaction equipment according to claim 1 or 2, **characterized in that**
plural pieces of said substrates (10), (68) are stacked to be in direct contact so that said grooves are positioned to be overlapped in plan view between the substrates (10), (68) respectively.

4. The liquid/liquid interface reaction equipment according to claim 3, **characterized in that**
at the faces of the adjacent substrates (10), (10) in direct contact, a groove that is formed at the front face of one substrate (10) and a groove that is formed at the back face of the other substrate (10) are intersected on the way to join the individual channel (26) of one substrate (10) and the individual channel (24) of the other substrate (10).

5. The liquid/liquid interface reaction equipment according to claim 3, **characterized in that**
at the faces of the adjacent substrates (68), (68') in direct contact, a groove that is formed at the back face of one substrate (68) and a groove that is formed at the front face of the other substrate (68') are positioned to be overlapped in plan view, as well as a groove that is formed at the front face of one substrate (68) and a groove that is formed at the back face of the other substrate (68') are positioned to be overlapped in plan view.

6. A liquid/liquid interface reaction equipment in which different kinds of liquids are made to flow in different individual channels (24, 76), (26, 78) respectively, said different individual channels (24, 76), (26, 78) are met each other on the way to form a liquid/liquid interface (S) of laminar flow in a combined channel (28, 80), and said different kinds of liquids are reacted with each other at said liquid/liquid interface (S); **characterized in that**
at least one groove is formed at the front face and the back face of a substrate (10), (68) respectively to form said different individual channels (24, 76), (26, 78) with said grooves; as well as said grooves are intersected to cause said different individual channels (24, 76), (26, 78) to meet each other in thickness direction of the substrate (10), (68); and
plural pieces of said substrates (10), (68) are stacked to be in direct contact so that said grooves are positioned to be overlapped each other in plan view between the substrates (10), (68).

7. The liquid/liquid interface reaction equipment according to claim 6, **characterized in that**
the sum of depth dimensions of each of said grooves that are formed at the front face and at the back face of the substrate (10) respectively is made larger than the thickness dimension of the substrate (10), and said grooves are intersected in plan view to cause said different individual channels (24), (26) to meet each other in thickness direction of the substrate (10).

8. The liquid/liquid interface reaction equipment according to claim 7, **characterized in that**
at the faces of the adjacent substrates (10), (10) in direct contact, a groove that is formed at the front face of one substrate (10) and a groove that is formed at the back face of the other substrate (10) are intersected on the way to join an individual channel (26) of one substrate (10) and an individual channel (24) of the other substrate (10).

9. The liquid/liquid interface reaction equipment according to claim 6, **characterized in that**
the groove depth of one or both of said grooves that are formed at the front face and at the back face of a substrate (68) respectively is made larger by degrees in downward direction, said grooves are intersected in thickness direction of the substrate (68) to cause said different individual channels (76), (78) to meet each other, and plural pieces of said substrates (68) are stacked with the front faces and the back faces opposed respectively in alternate order.

10. A liquid/liquid interface reaction equipment in which different kinds of liquids are made to flow in different individual channels (84), (86) respectively, said different individual channels (84), (86) are met each other on the way to form a liquid/liquid interface (S) of laminar flow in a combined channel (88), and said different kinds of liquids are reacted with each other at said liquid/liquid interface (88); **characterized in that**
grooves are formed at one face of two substrates (82a), (82b) respectively to form said different individual channels (84), (86) with said grooves, and two substrates (82a), (82b) are brought in direct contact so that the faces at which the grooves are formed are opposed, as well as said grooves are intersected in plan view to join said different individual channels (84), (86); and
plural pieces of substrates in sets of said two substrates (82a), (82b) are stacked to be in direct contact.

11. The liquid/liquid interface reaction equipment according to any one of claims 1 through 10, **characterized in that** at least one set of grooves that form different individual channels (108a, 110a), (108b, 110b) through which said different kinds of liquids flow respectively are formed in at least one side of the substrate (100), each of said grooves are intersected to cause said different individual channels (108a, 110a), (108b, 110b) to meet each other in one side of the substrate (100), a liquid/liquid interface (S1, S2) of laminar flow is formed in said one side combined channel (112, 114), and said different kinds of liquids are made to react with each other at said liquid/liquid interface (S1, S2) as well.
